(19) Europäisches Patentamt
European Patent Office
Office européen des brevets

(11) **EP 3 266 597 B1**

(12) **EUROPÄISCHE PATENTSCHRIFT**

(45) Veröffentlichungstag und Bekanntmachung des Hinweises auf die Patenterteilung:
**17.02.2021   Patentblatt 2021/07**

(51) Int Cl.:
***G01N 29/44*** *(2006.01)*

(21) Anmeldenummer: **17179567.7**

(22) Anmeldetag: **04.07.2017**

(54) **VERFAHREN ZUR HERSTELLUNG EINES FASERVERBUNDBAUTEILS**

METHOD FOR PRODUCING A FIBRE REINFORCED COMPOSITE ELEMENT

PROCÉDÉ DE FABRICATION D'UN COMPOSANT EN FIBRE COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2016   DE 102016112262**

(43) Veröffentlichungstag der Anmeldung:
**10.01.2018   Patentblatt 2018/02**

(73) Patentinhaber: **Deutsches Zentrum für Luft- und Raumfahrt e.V.**
**51147 Köln (DE)**

(72) Erfinder: **Liebers, Nico**
**38102 Braunschweig (DE)**

(74) Vertreter: **Gramm, Lins & Partner**
**Patent- und Rechtsanwälte PartGmbB**
**Freundallee 13a**
**30173 Hannover (DE)**

(56) Entgegenhaltungen:
**EP-A2- 1 484 165      DE-A1- 10 004 146**
**DE-A1- 10 146 323      DE-A1-102013 100 092**
**FR-A1- 2 900 237**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

# EP 3 266 597 B1

**Beschreibung**

Die Erfindung betrifft ein Verfahren zur Herstellung eines Faserverbundbauteils aus einem Faserverbund im Werkstoff, wobei ein Fasermaterial des Faserverbundwerkstoffes in ein Formwerkzeug eingebracht, das in das Formwerkzeug eingebrachte Fasermaterial mit einem Matrixmaterial des Faserverbundwerkstoffes infundiert und anschließend das in das Fasermaterial infundierte Matrixmaterial ausgehärtet, d.h. polymerisiert wird.

Der Einsatz von Faserverbundwerkstoffen vereint die Eigenschaft einer hohen Festigkeit und Steifigkeit eines Bauteils mit einem sehr geringen Gewicht. Der Einsatz derartiger Werkstoffe ist daher unter dem Aspekt des Leichtbaus besonders vorteilhaft. Allerdings ist die hohe gewichtspezifische Festigkeit und Steifigkeit des Werkstoffes richtungsabhängig, sodass bei Bauteilen, die eine hohe Festigkeit und Steifigkeit in mehrere verschiedene Richtungen aufweisen müssen, komplexe Strukturen entstehen, die nicht selten aus mehreren Einzelteilen zusammengesetzt werden müssen.

Faserverbundwerkstoffe weisen dabei in der Regel zwei verschiedene Hauptkomponenten auf:

  a) einen Faserwerkstoff bzw. ein Fasermaterial und

  b) ein Matrixmaterial.

Das Fasermaterial bzw. der Faserwerkstoff wird dabei von dem Matrixmaterial umschlossen und bildet so beim Aushärten (es wird auch Vernetzung bzw. Polymerisation gesprochen) des Matrixmaterials, bei dem das Matrixmaterial seine spezifische Festigkeit und Steifigkeit erhält, eine integrale Einheit. Als Fasermaterial kommen dabei insbesondere Kohlenstofffasern und Glasfasern in Betracht.

Die verwendeten Matrixmaterialien sind in der Regel Kunststoffe, wie beispielsweise Epoxidharz, oder allgemeiner thermoplastische oder duroplastische Kunststoffe. Durch Temperierung dieser Matrixmaterialien wird eine chemische Vernetzungsreaktion beschleunigt, die dazu führt, dass das Matrixmaterial polymerisiert und somit aushärtet und die darin eingebetteten Fasern des Fasermaterials in die entsprechende Form zwingt. Während duroplastische Kunststoffe nach dem Aushärten ihre feste Form auch unter Wärmeeintrag behalten, können thermoplastische Kunststoffe bei Überschreiten einer vorgegebenen Temperatur wieder aufgeschmolzen werden.

Bei der Herstellung eines Faserverbundbauteils, das aus einem Faserverbundwerkstoff gebildet werden soll, können sowohl trockene Fasermaterialien als auch vorimprägnierte Fasermaterialien (sogenannte Prepregs) verwendet werden. Werden trockene Fasermaterialien in ein Formwerkzeug eingebracht, um durch die formgebende Werkzeugoberfläche die entsprechende Preform in dem Werkzeug durch das Fasermaterial zu bilden, muss in einem weiteren Prozessschritt das Fasermaterial in dem Formwerkzeug mit dem Matrixmaterial infundiert werden, sodass das Fasermaterial schließlich in das Matrixmaterial eingebettet wird. Der Infusionsprozess an sich stellt dabei ein im gesamten Herstellungsverfahren sehr kritischen Prozessschritt dar, da nur durch eine vollständige Tränkung des Fasermaterials mit dem Matrixmaterial die notwendige Bauteilqualität sichergestellt werden kann. Verbleiben indes jedoch trockene, ungetränkte Bereiche innerhalb des Fasermaterials, so führen diese Bereiche nach dem Aushärten des Matrixmaterials zu Fehlstellen, an denen die geplanten Lasten des Bauteils nicht bestimmungsgemäß abgetragen werden können. Je nach Größe des ungetränkten Bereiches sowie dem Einsatzzweck des Faserverbundbauteils muss ein solches Bauteil dann als Ausschuss betrachtet werden.

Es ist daher wünschenswert, den Infusionsprozess möglichst lückenlos zu überwachen, um so zum einen die Entstehung von trockenen, ungetränkten Bereichen feststellen zu können und zum anderen gegebenenfalls regelnd in den Infusionsprozess eingreifen zu können, um die Gefahr von sich bildenden ungetränkten Bereichen zu verringern. Gerade bei vollständig geschlossenen Formwerkzeugen verläuft der Infusions- und Aushärtungsprozess dahingehend im Inneren autark ab, sodass eine vollständige Prozessüberwachung schnell an ihre Grenzen stößt.

Aus der DE 197 37276 C2 ist beispielsweise ein Verfahren zur Überwachung der Aushärtung von Duroplasten bekannt, bei dem eine in einem Formwerkzeug befindliche Formmasse mit Ultraschallwellen beschallt wird, die von einem ersten Ultraschallwandler in die Formmasse ausgesendet und von dem zweiten Ultraschallwandler empfangen und entsprechend ausgewertet werden. Mittels eines Referenzsignals kann dabei die Differenz zwischen ausgesendeten und empfangenen Signalen des Herstellungsprozesses analysiert werden.

Aus der DE 198 34 797 C2 ist ein Verfahren zum qualitätsgesteuerten Herstellen und Verarbeiten von Kunststoffen bekannt, bei dem akustische und/oder dielektrische Sensoren in das Formwerkzeug eingebracht und entsprechend akustische und/oder dielektrische Kennwerte des in dem Formwerkzeug befindlichen Bauteils ermittelt werden. Die Qualität des Formbauteils in dem Werkzeug wird dann mittels eines Expertensystems aus den gemessenen Kennwerten bewertet.

Aus der DE 10 2012 103 753 A1 ist ein Verfahren und eine Vorrichtung zum Überwachen eines Herstellungsprozesses zur Herstellung eines Formbauteils bekannt, wobei an einem Formwerkzeug entsprechende Schallgeber in Form von piezoelektrischen Keramiken appliziert sowie Schallsensoren in Form von piezoelektrischen Keramiken appliziert werden, um so Schallimpulse in das Formbauteil auszusenden und empfangen zu können. Basierend auf den empfangenen Ultraschallsignalen kann dann der Herstellungsprozess in dem geschlossenen Formwerkzeug überwacht werden.

Aus der FR 2 900 237 ist eine Vorrichtung zur Ermittlung der Durchlässigkeit bzw. Permeabilität des Fasermaterials bekannt, wobei hierbei ein Matrixmaterial in einen Innenraum hineingedrückt und der an der Werkzeugoberfläche entstehende Druck an verschiedenen Stellen gemessen wird, so dass sich hieraus Rückschlüsse auf die Permeabilität des Fasermaterials geschlossen werden kann.

Es hat sich gezeigt, dass die Fließgeschwindigkeit sowie die Fließrichtung des Matrixmaterials während des Infundierens in das Fasermaterial wesentliche Parameter sind, anhand dessen der Infusionsprozess hinsichtlich der Qualität des entstehenden Bauteils überwacht werden kann. Gerade bei geschlossenen Formwerkzeugen ist jedoch eine optische Verifikation der Fließgeschwindigkeit und der Fließrichtung des Matrixmaterials innerhalb des Fasermaterials nicht möglich, sodass in der Regel hierüber keine Informationen vorliegen.

Es ist daher Aufgabe der vorliegenden Erfindung, ein Verfahren zur Herstellung eines Faserverbundbauteils anzugeben, mit denen die Fließgeschwindigkeit und/oder Fließrichtung des in das Fasermaterial infundierten Matrixmaterials mit Hilfe von an dem Formwerkzeug angeordneten Sensoren bestimmt werden kann, ohne das Konzept der geschlossenen Formwerkzeuge aufgeben zu müssen.

Die Aufgabe wird mit dem Verfahren gemäß Anspruch 1 erfindungsgemäß gelöst.

Gemäß Anspruch 1 wird ein Verfahren zur Herstellung eines Faserverbundbauteils aus einem Faserverbundwerkstoff vorgeschlagen, wobei gattungsgemäß ein Fasermaterial des Faserverbundwerkstoffs in ein Formwerkzeug eingebracht, dass in das Formwerkzeug eingebrachte Fasermaterial mit einem Matrixmaterial des Faserverbundwerkstoffes infundiert und anschließend das in das Fasermaterial infundierte Matrixmaterial ausgehärtet wird. Bei diesem gattungsgemäßen Herstellungsverfahren soll dabei der Infusionsprozess hinsichtlich der Fließgeschwindigkeit und/oder der Fließrichtung überwacht werden.

Gattungsgemäß wird des Weiteren hierfür ein Formwerkzeug bereitgestellt, an dem mindestens ein Sensor zur Überwachung der Fließfront des Matrixmaterials während des Infundierens angeordnet ist. Vorzugsweise sind mehrere Sensoren an dem Formwerkzeug angeordnet, um so kontinuierlich über die gesamte Ausdehnung des Bauteils hinweg den Prozess überwachen zu können. Derartige Sensoren können beispielsweise piezoelektrische Keramiken sein, wie sie in der DE 10 2012 103 753 A1 als Ultraschallsensoren (Schallgeber und Schallsensor in einem) Verwendung finden.

Während des Infundierens des Matrixmaterials in das Fasermaterial werden nun erfindungsgemäß Sensorsignale mittels des mindestens einen Sensors innerhalb eines Zeitraumes während des Infundierens erfasst und vorzugsweise in einem Datenspeicher einer Auswerteeinheit hinterlegt. Der Zeitraum des Erfassens der Sensorsignale umfasst dabei zumindest den Zeitraum, in dem das Matrixmaterial die Grenzschicht zwischen der Formwerkzeugoberfläche und dem Fasermaterial an der Sensorposition des Sensors benetzt, wodurch das Sensorsignal, das von dem Sensor erfasst wird, sich gegenüber dem unbenetzten Zustand verändert. Vorteilhafterweise werden jedoch die Sensorsignale während des gesamten Infusionsprozesses erfasst.

Der verwendete Sensor sowie das Sensorsignal sind erfindungsgemäß dergestalt, dass das Sensorsignal mit der benetzten Fläche der Grenzschicht zwischen Formwerkzeugoberfläche und Fasermaterial an der gegebenen Sensorposition korreliert, sodass mit zunehmender benetzter Fläche der Grenzschicht an der Sensorposition das Sensorsignal sich immer weiter verändert. So hat sich bei Ultraschallsensoren beispielsweise gezeigt, dass im unbenetzten Zustand das von dem Ultraschallsensor ausgesendete Ultraschallsignal (Sensorsignal) vollständig an der Grenzschicht reflektiert wird, sodass nahezu kein Amplitudenabfall in dem reflektierten Sensorsignal detektierbar ist. Wird nun der Bereich der Grenzschicht zwischen Formwerkzeugoberfläche und Fasermaterial, der dem Sensor entspricht, mit Matrixmaterial benetzt, so verändert sich das reflektierte Sensorsignal, was durch eine größere Dämpfung der Amplitude feststellbar ist. Dabei wurde erkannt, dass insbesondere bei einem Ultraschallsensor das empfangene Sensorsignal mit der benetzten Grenzschicht flächenmäßig korreliert.

Aus den erfassten Sensorsignalen wird nun mittels einer Auswerteeinheit ein Sensorsignalverlauf über die Zeit ermittelt, wobei sich die Änderung des Sensorsignalverlaufes über die einzelnen Sensorsignale durch die Benetzung der Grenzschicht zwischen Formwerkzeug und Fasermaterial mit Matrixmaterial ergibt.

Aus diesem Sensorsignalverlauf wird nun eine Sensorsignaländerung über die Zeit abgeleitet, die in Bezug auf den Fließfortschritt mit der Benetzungsfläche der Grenzschicht, die dem Sensor entspricht, korreliert, woraus die Fließfrontgeschwindigkeit und/oder die Fließfrontrichtung bestimmt werden kann.

Die Fließfrontgeschwindigkeit lässt sich während des Infundierens des Matrixmaterials in Abhängigkeit von einer aus dem Sensorsignalverlauf abgeleiteten Sensorsignaländerung über die Zeit und bekannter Sensorabmessung und/oder Sensorfläche des das sensorsignalliefernden Sensors berechnen.

So lässt sich bspw. der Anfang und das Ende bei der Benetzung der dem Sensorquerschnitt entsprechenden Grenzschicht aus der Sensorsignaländerung bestimmen, wodurch sich für die Ermittlung der Geschwindigkeit ein Zeitparameter und aus der bekannten Sensorabmessung ein Wegparameter ergibt, aus dem sich die Fließfrontgeschwindigkeit des Matrixmaterials über die Sensorfläche berechnen lässt.

Alternativ oder zusätzlich lässt sich aus der zuvor beschriebenen Korrelation zwischen der Fläche der benetzten Grenzschicht und dem Sensorsignal die Fließfrontrichtung bei nicht-rotationssymmetrischen Sensorquerschnitten bezüglich des Formwerkzeuges während des Infundierens des Matrixmaterials bestimmen, da erkannt wurde, dass die Sensorsignaländerung (ableitbar aus dem Sensorsignalverlauf) beim Fließfrontdurchgang des Matrixmaterials durch den Bereich, der dem Sensor entspricht, auch von der Fließrichtung in Bezug zum Sensor abhängt. Demzufolge wird die Fließfrontrichtung in Bezug zum Formwerkzeug in Abhängigkeit von einer aus dem Sensorsignalverlauf abgeleiteten Sensorsignaländerung über die Zeit und einer Sensorausrichtung bezüglich des Formwerkzeuges berechnet. So lässt sich der Winkel der Fließfront in Bezug zum Sensor in Abhängigkeit von einer Form der Sensorsignaländerung über die Zeit (sogenannter Sensorsignaländerungsverlauf) bestimmen.

Mit der vorliegenden Erfindung wird es somit möglich, mittels eines einzelnen Sensors, dessen Sensorsignal mit der benetzten Fläche der Grenzschicht zwischen Formwerkzeugoberfläche und Fasermaterial an der gegebenen Sensorposition korreliert, die Fließfrontgeschwindigkeit und - bei nichtrotationssymmetrischen Sensorquerschnitten - die Fließfrontrichtung allein aus den erfassten Sensorsignalen zu berechnen, sodass diese Eigenschaften des Infusionsprozesses beispielsweise in eine Dokumentation oder in eine aktive Regelung des Infusionsprozesses eingehen können. Hierdurch kann auch weiterhin an dem Prinzip des geschlossenen Formwerkzeugs festgehalten werden und dennoch die beiden für den Infusionsprozess wichtigen Parameter - Fließfrontgeschwindigkeit und Fließfrontrichtung - bestimmt werden.

Gemäß einer vorteilhaften Ausführungsform wird für die Berechnung der Fließfrontgeschwindigkeit ein Zeitintervall zwischen dem Anfang und dem Ende der aus dem Sensorsignalverlauf abgeleiteten Sensorsignaländerung bestimmt und die Fließfrontgeschwindigkeit in Abhängigkeit von dem Zeitintervall und der bekannten Sensorabmessung und/oder Sensorfläche des Sensors berechnet.

Hierbei ist es vorteilhaft, wenn der Anfang und das Ende der Sensorsignaländerung in Abhängigkeit von einem Maximalwert der ersten Ableitung des Sensorsignalverlaufes nach der Zeit berechnet wird, wobei das Zeitintervall zwischen dem Anfang und dem Ende der Sensorsignaländerung als Zeitdauer der Sensorsignaländerung genutzt wird. Basierend auf dem Verhältnis zwischen vernetzter Sensorfläche und Fießfortschritt definiert der Maximalwert der ersten Ableitung des Sensorsignalverlaufes bei zumindest einem kreisförmigen Sensorquerschnitt die maximale Signaländerung, die sich aus der maximalen benetzten Fläche pro Zeit über dem Sensor ergibt. Daher kann aus dem Maximalwert der ersten Ableitung des Sensorsignalverlaufes bei einem insbesondere kreisförmigen Sensorquerschnitt auf die Mitte des Sensors geschlossen werden, wodurch sich insbesondere die Parameter des Anfangs und des Endes der Sensorsignaländerung besser bestimmen lassen.

In einer weiteren vorteilhaften Ausführungsform wird für die Berechnung der Fließfrontgeschwindigkeit die erste Ableitung des Sensorsignalverlaufes nach der Zeit (Sensorsignaländerung über die Zeit) berechnet und eine parametrisierte Kurve der berechneten ersten Ableitung des Sensorsignalverlaufes durch Anpassen von Parametern der parametrisierten Kurve angenähert. Aus mindestens einem Parameter der parametrisierten Kurve lässt sich dann die Fließgeschwindigkeit über dem Sensor ableiten.

Hierfür ist es beispielsweise denkbar, dass die Parameter der parametrisierten Kurve mittels eines Optimierungsalgorithmus derart angepasst werden, dass die Summe der quadratischen Fehler zwischen den Messpunkten der ersten Ableitung der parametrisierten Kurve minimal wird.

Es hat sich gezeigt, dass für einen kreisförmigen Sensorquerschnitt eine Ellipse als parametrisierte Kurve gemäß der Formel

$$y = \begin{cases} \frac{s}{r} \cdot \sqrt{r^2 - \left(\chi - c\right)^2} & f\ddot{u}r -\frac{r}{2} \leq \chi - c \leq \frac{r}{2} \\ 0 & sonst \end{cases}$$

vorteilhaft ist, wobei c der Mittelpunkt der Ellipse, r der Radius der Ellipse (Breite der Ellipse) und s ein Skalierungsfaktor ist. Die Fließfrontgeschwindigkeit lässt sich dabei in Abhängigkeit von der Breite der Ellipse gemäß der Formel

$$v = \frac{D_{Sensor}}{2 \cdot r_{Ellipse}}$$

berechnen, wobei $D_{Sensor}$ der Durchmesser des kreisförmigen Sensors ist und $r_{Ellipse}$ der Radius der Ellipse ist. Der Radius der Ellipse wurde dabei zuvor durch Fitten der parametrisierten Ellipsenkurve y auf die erste Ableitung des Sensorsignalverlaufes ermittelt, indem die Parameter c und r der parametrisierten Ellipsenkurve y durch einen Optimierungsalgorithmus an die erste Ableitung des Sensorsignalverlaufes angepasst wurden. Ist eine solche parametrisierte Kurve mit ihren entsprechenden Parametern gefunden, die die erste Ableitung des Sensorsignalverlaufes bestmöglich annähert, so kann dann zumindest aus einem der Parameter, im Beispiel der Ellipse aus dem Radius der Ellipse, die Fließgeschwindigkeit berechnet werden.

Da bei höheren Wanddicken der Gradientenverlauf glockenförmig ist, bietet sich für die Annäherung der ersten Ableitung des Sensorsignalverlaufes eine Gauß'sche Glockenkurve als parametrisierte Kurve gemäß der Formel

$$y = s \cdot \exp\left( -\frac{(\chi - \mu)^2}{2\sigma^2} \right)$$

an. Der Parameter $\mu$ steht hier für den Mittelpunkt, der Parameter $\sigma$ für die Breite und s für den Skalierungsfaktor.

Die Fließfrontgeschwindigkeit lässt sich dann in Abhängigkeit von der Breite der Gauß'schen Glockenkurve gemäß

$$v = \frac{D_{Sensor}}{\sigma_{Gauss}}$$

berechnen, wobei auch hier $D_{Sensor}$ der Durchmesser des kreisförmigen Sensors und $\sigma_{Gauss}$ die Breite der Gauß'schen Glockenkurve darstellt.

Da in der Realität das Sensorsignalfeld über dem Sensor, insbesondere bei einem Ultraschallsensor das entsprechende Druckfeld nicht homogen ist, sondern mit zunehmendem Abstand zum Rand schwächer wird, findet die Sensorsignaländerung bei der Fließfrontdetektion in einem kleineren Bereich als der tatsächlichen Sensorbreite statt. Um das Ergebnis der Berechnung der Fließfrontgeschwindigkeit hierdurch in seiner Genauigkeit nicht allzu sehr zu beeinträchtigen ist es vorteilhaft, wenn eine Korrektur mithilfe von Korrekturfaktoren bei der Berechnung der Fließfrontgeschwindigkeit stattfindet.

Diese Korrekturfaktoren für die Berechnung der Fließfrontgeschwindigkeit werden dabei in Abhängigkeit von dem Durchmesser des kreisförmigen Sensors gewählt und lassen sich analytisch, durch eine Simulation oder durch eine Kalibrierung mithilfe eines offenen Werkzeuges und einer Videoanalyseverifikation bestimmen. Zur Bestimmung der Fließfrongeschwindigkeit basierend auf einer gefitteten Gauß'schen Glockenkurve als parametrisierte Kurve ergibt sich somit eine Formel

$$v = \varepsilon \cdot \frac{D_{Sensor}}{\sigma_{Gauss}} + k \,,$$

wobei die Korrekturfaktoren $\varepsilon$ und $k$ die schwache, in der Realität meist nur schwierig zu detektierende Sensorsignaländerung im Randbereich des Sensors kompensieren sollen.

Bei der Berechnung der Fließfrontgeschwindigkeit werden vorzugsweise Sensoren mit einem kreisförmigen Sensorquerschnitt verwendet, aus deren Sensorsignaländerung jedoch keine Richtungsinformation ableitbar ist. Für die Berechnung der Fließfrontgeschwindigkeit eignen sich neben Sensoren mit einem kreisförmigen Sensorquerschnitt auch Sensoren mit einem nicht-rotationssymmetrischen Sensorquerschnitt, wie beispielsweise rechteckige Sensorquerschnitte, quadratische Sensorquerschnitte, dreieckige Sensorquerschnitte. Der Verlauf der Sensorsignaländerung enthält bei solchen nicht-rotationssymmetrischen Sensorquerschnitten eine richtungsabhängige Signaländerung, so dass sich hieraus auch ein Winkel in Bezug zu der Fließfront, mit dem die Fließfront auf den Sensor trifft, berechnen lässt. In der Regel entspricht dabei der detektierbare Winkel der Hälfte eines Einzelwinkels zwischen zwei Schenkeln des nicht-rotationssymmetrischen Sensorquerschnittes. Bei einem rechteckigen Sensorquerschnitt bedeutet dies, dass ein Winkel von 0 bis 45° in Bezug zu dem Sensor ermittelbar ist. Durch die Anordnung mehrerer nicht-rotationssymmetrischer Sensoren in einer geometrischen Form und unter einem gewissen Winkel zueinander lässt sich die Detektionsgenauigkeit in Bezug auf den Fließfrontwinkel deutlich verbessern.

Bei der Berechnung der Fließfrontrichtung ist es vorteilhaft, wenn die erste Ableitung des Sensorsignalverlaufes nach der Zeit berechnet in eine parametrisierte Kurve der berechneten ersten Ableitung des Sensorsignalverlaufes durch Anpassen der Parameter der parametrisierten Kurve angenähert wird, wobei aus mindestens einem Parameter der parametrisierten Kurve die Fließfrontrichtung abgeleitet werden kann.

Für einen zumindest rechteckigen Sensorquerschnitt kann eine parametrisierte Kurve gemäß

$$y = \begin{cases} s & f\ddot{u}r\left|t - t_m\right| \le \frac{b_1}{2} \\ m \cdot t + n_1 & f\ddot{u}r - b_2 < t - t_m + \frac{b_1}{2} < 0 \\ -m \cdot + n_2 & f\ddot{u}r\, 0 < t - t_m - \frac{b_1}{2} < b_2 \\ 0 & f\ddot{u}r\left|t - t_m\right| \ge \frac{b_1}{2} + b_2 \end{cases}$$

mit

$$m = \frac{s}{b_2}, \quad n_1 = s \cdot \left(1 - \frac{2 \cdot t_m - b_1}{2 \cdot b_2}\right) \quad und \quad n_2 = s \cdot \left(1 + \frac{2 \cdot t_m + b_1}{2 \cdot b_2}\right)$$

genutzt werden, wobei der Parameter $b_1$ ein Zeitintervall des sich ändernden Sensorsignalverlaufes (zunehmende Sensorsignaländerung oder abnehmende Sensorsignaländerung), $b_2$ als Zeitintervall mit gleichbleibendem Sensorsignalverlauf, s als Maximum der der benetzten Sensorfläche pro Zeit, t als Zeitparameter und $t_m$ als der Zeitpunkt beim Erreichen der geometrischen Sensormitte definiert ist.

Ein Fließfrontwinkel $\Theta$ zwischen einem Schenkel des zumindest rechteckigen Sensorquerschnitts und der Fließfront kann dann gemäß der Formel

$$\tan \Theta = \frac{b_2}{b_1 + b_2}$$

oder gemäß

$$\tan \Theta = s - 1$$

berechnet werden, wobei die Fließfrontrichtung dann in Abhängigkeit von dem Fließfrontwinkel $\Theta$ und der Sensorausrichtung bezüglich des Formwerkzeuges ermittelt wird.

Vorteilhafterweise wird ein Formwerkzeug bereitgestellt, an dem akustische Sensoren, insbesondere Ultraschallsensoren, angeordnet sind, die ein Ultraschallsignal in das Bauteil aussenden und entsprechend empfangen können. Solche Ultraschallsensoren können dabei beispielsweise piezoelektrische Sensoren, beispielsweise piezoelektrische Keramiken sein, die direkt an dem Formwerkzeug angeordnet werden, so dass zwischen Formwerkzeug und der piezoelektrischen Keramik kein Sensorvorlauf entsteht, wie dies beispielsweise bei Ultraschallköpfen der Fall ist. Eine solche piezoelektrische Keramik kann dabei sowohl Schallgeber als auch Schallsensor in einem sein, so dass beispielsweise ein Sensorsignal im Impuls-Echo-Verfahren erfasst werden kann. Hierbei wird von dem Ultraschallsensor ein Ultraschallsignal in das Bauteil ausgesendet und dann die Reflektion empfangen, wobei dies dann als Sensorsignal für die Berechnung der Fließfrontgeschwindigkeit in Fließfrontrichtung genutzt werden kann.

Derartige Sensoren können aber auch dielektrische Sensoren sein, bei denen aus einem sich endenden Impedanzverhalten des Bauteils Rückschlüsse auf die Ankunft der Fließfront an der jeweiligen Sensorposition möglich sind. Denkbar ist aber auch, dass es sich bei den Sensoren um kernmagnetische Resonanzsensoren handelt, die zum Erfassen der sogenannten kernmagnetischen Resonanz oder Kernspin-Magnetresonanz ausgebildet sind.

Die Erfindung wird anhand der beigefügten Figuren beispielhaft erläutert. Es zeigen:

Figur 1     - Schematische Darstellung einer Vorrichtung zum Herstellen eines Faserverbundbauteils;

Figur 2     - Verhältnis zwischen benetzter Fläche und Fließfrontfortschritt;

Figur 3     - Verhältnis eines quadratischen Sensors im Verhältnis zur benetzen Fläche, Fließfrontfortschritt und Drehwinkel;

Figur 4     - geometrischer Zusammenhang der für die Berechnung der Fließfrontrichtung genutzten parametrisierten Kurve.

Die Fasertränkung bei Injektions- oder Infusionsverfahren ist ein sehr kritischer Prozessschritt, welcher mit hoher Sensitivität auf kleinere Abweichungen in Preform, Temperaturverteilung und Viskosität der Faser reagiert. Auch Abweichungen in Hilfsmitteln wie Faltenbildung in der Vakuummembran können das Fließbild signifikant beeinflussen. Solche Falten bilden Kanäle, in welchen das Harz durch den geringeren Fließwiderstand deutlich schneller fließen kann als im Fasermaterial. Dies kann zu starkem Voreilen der Harzfront führen, wodurch noch nicht imprägniertes Fasermaterial von der Fließfront umschlossen wird. Ein Einschluss kann bei unzureichendem Druckgradienten und Fließfähigkeit des Harzes nicht mehr geschlossen werden, so dass dieser nicht vollständig imprägniert wird. Ein solcher Einschluss ist ein schwerer Defekt und kann in der Regel nicht nachträglich behoben werden, so dass das Bauteil nicht verwendet werden kann. Auch andere Abweichungen wie fehlende Rovings im Faserhalbzeug oder ein Freiraum am Rand der Preform können solche Kanäle bilden.

Aus diesen Gründen ist es sinnvoll, das Fließbild und den Füllfortschritt zu überwachen. In vielen Fällen kann die Harzausbreitung optisch verfolgt werden, jedoch ist dies nicht bei allen Verfahren und Bauteilen möglich, so wie generell bei allen Closed-Mould-Verfahren. Aber auch bei Open-Mould-Verfahren sind oft Bereiche verdeckt oder eine optische Überwachung im Ofen oder Autoklaven ist nicht möglich oder zu aufwendig. Hierfür eignen sich insbesondere Ultraschallsensoren, da kein direkter Kontakt zum Fasermaterial oder Harz notwendig ist, sondern nur zur Außenfläche des Formwerkzeuges.

Die Harzankunft an einem Sensor kann dabei im Impuls-Echo-Verfahren aber auch im Durchschallungsverfahren detektiert werden. Bevor das Fasermaterial und die Grenzschicht zwischen Fasermaterial und Formwerkzeug im Bereich des Sensors benetzt wird, werden die Schallwellen aufgrund des hohen Impedanzunterschiedes zwischen Formmaterial und Vakuum nahezu vollständig zurück zum Sender reflektiert. In Folge dessen wird vom gegenüberliegenden Empfänger kein Signal registriert. Erreicht die Harzfront die Messstelle und benetzt die Grenzschicht zwischen Fasermaterial und Formwerkzeug, sinkt an dieser Stelle durch die höhere Impedanz des Harzes der Betrag des Reflektionsfaktors. Infolgedessen wird ein Anteil in das Laminat transmittiert bzw. ein geringerer Schallanteil zurückreflektiert. Durch kontinuierliche Benetzung des wirksamen Querschnitts sinkt damit die Amplitude des zurückreflektierten Schallsignals, bis der gesamte Querschnitt vollständig gefüllt ist.

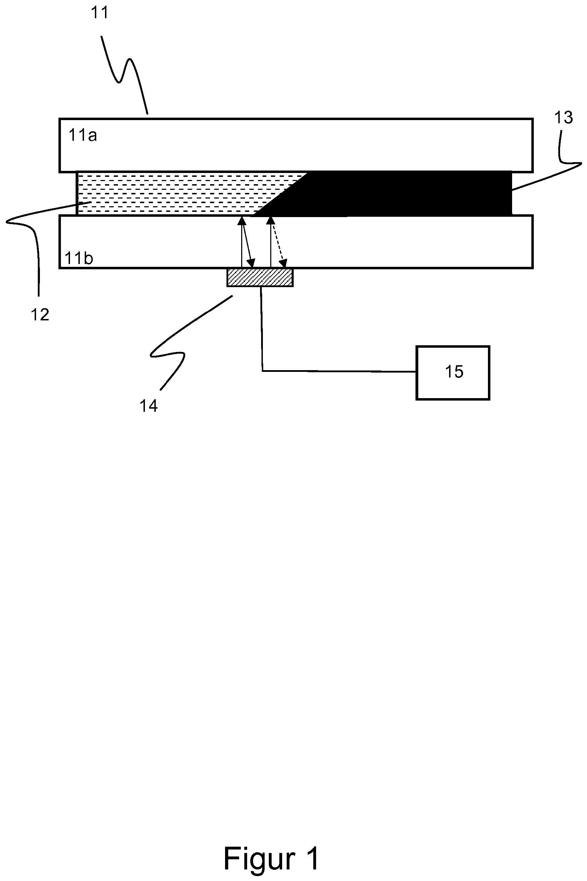

Figur 1 zeigt ein Beispiel einer Vorrichtung 10, um ein Faserverbundbauteil aus einem Faserverbundwerkstoff herstellen zu können. Die Vorrichtung 10 weist ein Formwerkzeug 11 auf, das ein geschlossenes Formwerkzeug darstellt und ein Oberteil 11a und ein Unterteil 11b aufweist. Zwischen den beiden Formwerkzeugteilen 11a und 11b ist dabei ein Fasermaterial 12 eingebracht, das im Ausführungsbeispiel der Figur 1 durch einen entsprechenden Anguss von rechts mit Matrixmaterial 13 gefüllt werden soll. An dem unteren Teil 11b des Formwerkzeuges 11 ist dabei ein Ultraschallsensor 14 angeordnet, der zum Aussenden von Ultraschallsignalen in das Formwerkzeug und in das angrenzende Bauteil ausgebildet und zum Empfangen der reflektierten Ultraschallsignale ausgebildet ist.

Während des Infundierens des Matrixmaterials in das Fasermaterial wird dabei kontinuierlich ein Ultraschallsignal ausgesendet und empfangen, so dass sich über den gesamten Infusionsprozess hinweg ein Sensorsignalverlauf ergibt.

Es hat sich gezeigt, dass mit zunehmender Benetzung der Grenzschicht zwischen Fasermaterial und Formwerkzeug im Bereich des Sensors 14 die Amplitude des Ultraschallsignals in zu der benetzten Fläche korrelierender Art und Weise verändert, so dass über die Zeit während des Infundierens des Matrixmaterials die Amplitude des empfangenen Echos des Ultraschallsignals extrahiert und als Ergebnis des Sensorsignals verwendet wird. Über die Zeit ergibt sich dabei während der Benetzung der Grenzschicht an der Sensorposition ein Abfall der detektierten Amplitude des Sensorsignals als Sensorsignaländerung, die zur Berechnung der Fließfrontgeschwindigkeit und Fließfrontrichtung herangezogen werden kann.

Zur Steigerung der Sensitivität kann die mehrfache Reflektion an der Grenzschicht zum Laminat ausgenutzt werden, so dass die Änderung der Reflektionsamplitude durch die Benetzung der Formwerkzeugoberfläche vergrößert wird. Bei einer einfachen Reflektion fällt das Verhältnis der Amplitude nach und vor dem Fließfrontdurchgang auf ca. 93 % bei Stahl und 82 % bei Aluminium. Durch die mehrfache Reflektion sinkt das Verhältnis mit der Potenz der Anzahl der Reflektionen, wobei bis zur dritten Reflektion die Beobachtungen gut dem Trend entsprechen. Bei der vierten Reflektion ist das Verhältnis noch deutlich kleiner.

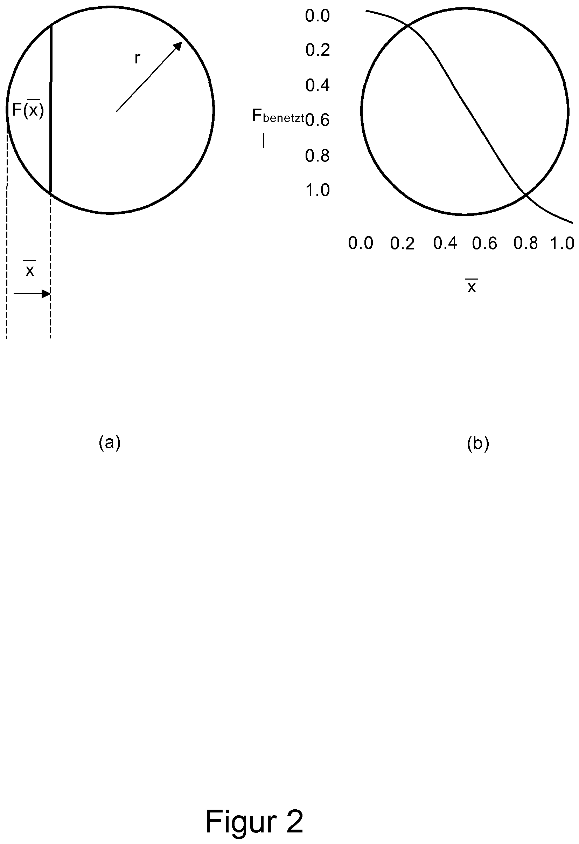

Figur 2 zeigt das Verhältnis zwischen der benetzten Fläche a) zu dem Fließfrontfortschritt x. Im Beispiel der Figur 2 sind beide Werte entsprechend normiert.

Durch den Fließfrontdurchgang ändert sich der effektive Reflektionsgrad $R_F$ über der wirksamen Querschnittsfläche $F_{Sensor}$ des Sensors in Abhängigkeit von der von dem Matrixmaterial an der Grenzschicht an der Sensorposition benetzten Oberfläche $F_{be-netzt}$ nach der folgenden Gleichung:

$$R_{eff} = \left(1 - \frac{F_{benetzt}}{F_{Sensor}}\right) \cdot R_0 + \frac{F_{benetzt}}{F_{Sensor}} \cdot R_1$$

$$= R_0 - \frac{F_{benetzt}}{F_{Sensor}} \cdot (R_0 - R_1)$$

Für die normierte Amplitude des Impulsechosignals ergibt sich daraus,

$$\overline{A}_{PE} = \frac{A_{PE}}{A_{PE,0}} = \frac{R_{eff}}{R_0} = 1 - \frac{F_{benetzt}}{F_{Sensor}} \cdot \left(1 - \frac{R_1}{R_0}\right)$$

Bei einem idealen, rechteckigen Sensor, der senkrecht zur Fließrichtung ausgerichtet ist, ergibt sich ein linearer Abfall, da die überstrichende Oberfläche linear vom Fließ weg abhängt. Bei einem kreisförmigen Sensor hingegen liegt keine lineare Abhängigkeit vor. Ein Halbkreis mit normiertem Radius r = ½ zentriert um den Punkt $\overline{\chi}$ = ½, y = 0 und lässt sich durch die Gleichung

$$y = \sqrt{\frac{1}{4} - \left(\overline{\chi} - \frac{1}{2}\right)^2}$$

beschreiben. Dabei stellt $\overline{\chi}$ den normierten Fließfortschritt über den Sensor im Bereich 0 > $\overline{\chi}$ > 1 dar. Durch Integration der Gleichung kann in Abhängigkeit von $\overline{\chi}$ der Flächeninhalt $F_0$ bzw. der bei $\overline{\chi}$ = 1 auf 1 normierte Flächeninhalt $\overline{F}_0$ ermittelt werden aus:

$$F_{benetzt}(\overline{\chi}) = 2 \cdot \int y \, d\overline{\chi} = \frac{2\chi - 1}{4}\sqrt{1 - (2\overline{\chi} - 1)^2} + \frac{1}{4}a\sin(2\chi - 1) + \frac{\pi}{8}$$

$$\overline{F}_{benetzt}(\overline{\chi}) = \frac{4}{\pi}F_{benetzt}(\overline{\chi}) = \frac{2\chi - 1}{\pi}\sqrt{1 - (2\overline{\chi} - 1)^2} + \frac{1}{\pi}a\sin(2\chi - 1) + \frac{1}{2}$$

Infolgedessen lässt sich über den Sensordurchmesser und die Dauer des Amplitudenabfalls (Zeitdauer der Sensorsignaländerung aus dem Sensorsignaländerungsverlauf) die Fließgeschwindigkeit über den Sensor bestimmen, wobei dann von einer konstanten Fließgeschwindigkeit über dem Sensor ausgegangen wird. Es hat sich in der Praxis jedoch gezeigt, dass das Ende des Amplitudenabfalls großen Schwankungen unterliegt, die vermutlich durch Gasblasen im Harz oder den Harzfluss selbst verursacht werden, sodass unter Umständen dieser Zeitpunkt nicht zuverlässig bestimmt werden kann.

Eine Möglichkeit zur Bestimmung der Fließgeschwindigkeit stellt dabei die Ableitung der Amplitude über die Zeit dar, die proportional zur Fließgeschwindigkeit ansteigt. Aus den zuvor genannten Gleichungen ergibt sich die Ableitung über den Fließfrontfortschritt $\overline{\chi}$ und seinem Maximalwert bei $\overline{\chi}$ = ½ zu

$$\frac{d\overline{A}(\overline{\chi})}{d\overline{\chi}} = \frac{8}{\pi}\sqrt{\frac{1}{4} - \left(\overline{\chi} - \frac{1}{2}\right)^2} \cdot \left(1 - \frac{R_1}{R_0}\right)$$

$$\frac{d\overline{A}(\overline{\chi})}{d\overline{\chi}}\left(\overline{\chi} = \frac{1}{2}\right) = \frac{4}{\pi} \cdot \left(1 - \frac{R_1}{R_0}\right)$$

Hieraus lässt sich dann bei einem kreisförmigen Sensorquerschnitt die Fließfrontgeschwindigkeit aus

$$v = \frac{d\overline{\chi}}{dt} \cdot D_{Sensor} = \left(\frac{dA}{dt}\right)\left(\frac{dA}{d\overline{\chi}}\right)^{-1} \cdot D_{Sensor}$$

$$v = \frac{\max\left(\frac{dA}{dt}\right) \cdot D_{Sensor}}{\frac{4}{\pi} \cdot \left(1 - \frac{R_1}{R_0}\right)}$$

berechnen.

Basierend auf der bekannten Fläche des Sensors (ergibt sich aus der Sensorform und den Abmessungen des Sensors, beispielsweise bei einem kreisförmigen Sensor durch den Radius) und dem Amplitudenabfall über die Zeit (Sensorsignaländerung über die Zeit) lässt sich somit die Geschwindigkeit ableiten, sodass basierend auf dem Impuls-Echoverfahren eines piezoelektrischen Sensors die Fließfrontgeschwindigkeit berechnet werden kann.

In der Praxis hat sich jedoch gezeigt, dass das Schallfeld eines realen Schallwandlers nicht homogen ist und stark von den Gegebenheiten wie der Wandlergröße, seiner Frequenz, der Schallgeschwindigkeit des Übertragungsmediums mit der Entfernung vom Wandler abhängt. Erst im Entfernfeld kann wieder eine homogene Schallverteilung angenommen werden. Trotz der Unterschiede besitzen die Kurven dennoch Gemeinsamkeiten, die zur Auswertung genutzt werden können. Die Kurven besitzen die gleichen Anfangs- und Endpunkte als auch eine nahezu gleiche Steigung in diesen Punkten. Der Endpunkt - Respektive der Mittelpunkt der vollständigen Kurve - ist ebenfalls ein Wendepunkt, wie er am konstanten Verlauf der ersten Ableitung erkennbar wird. Diese gemeinsamen Eigenschaften können dann dazu genutzt werden, die Fließgeschwindigkeit unabhängig von der Dicke des Formwerkzeuges zu bestimmen. Während des Infusionsvorgangs wird die Amplitude (Sensorsignal) über die Prozesszeit gemessen, die dann zur Bestimmung der Fließgeschwindigkeit auf den dazugehörigen Fließweg kalibriert wird. Da unabhängig der Wanddicke über den gesamten Bereich von $0 > = \overline{\chi} > = 1$ - welche der Breite des Sensors entspricht - die Amplitude abfällt und daher die Ableitung in diesem Bereich ungleich 0 ist, kann während der Messung aus der Dauer dieser Amplitudenänderung die Fließgeschwindigkeit bestimmt werden.

Unter Umständen kann jedoch das Impuls-Echo-Signal und dessen Amplitude einem Rauschen unterliegen, sodass der Anfang und das Ende des Bereiches, in welchem die Amplitude abfällt, nicht zuverlässig bestimmt werden kann. Daher kann zusätzlich der Maximalwert der ersten Ableitung genutzt werden, die Fließgeschwindigkeit aus diesem zu ermitteln.

Eine betrachtete Methode, die Geschwindigkeit aus dem Amplitudenverlauf zu bestimmen, ist das Fitten einer parametrisierten Kurve in die Messkurve der Ableitung der Amplitude nach der Zeit. Die Parameter werden dabei mittels eines Optimierungsalgorithmus so angepasst, dass die Summe der quadratischen Fehler zwischen Messpunkten und Kurve minimal wird. Aus dem Parameter kann dann die Geschwindigkeit abgeleitet werden. Dafür bietet sich einerseits eine Ellipse an, da sie den idealen Verlauf eines kreisförmigen Sensors abbildet, diese wird wie folgt definiert:

$$y = \begin{cases} \frac{s}{r} \cdot \sqrt{r^2 - (\chi - c)^2} & für -\frac{r}{2} \leq \chi - c \leq \frac{r}{2} \\ 0 & sonst \end{cases}$$

Der Parameter c) spiegelt die Stelle des Scheitelpunktes bzw. des Mittelpunktes der Ellipse wieder. Der Radius R ist ein Maß für die Breite der Ellipse und der Skalierungsfaktor S gibt die Höhe des Scheitelpunktes wieder.

Da bei höheren Wanddicken der Gradientenverlauf glockenförmig ist, bietet sich die Annäherung mit einer Gauß'schen Glockenkurve an. Diese wird mit den Parametern c für den Mittelpunkt, der Breite σ und dem Skalierungsfaktor s definiert zu

$$y = s \cdot \exp\left(-\frac{(\chi - \mu)^2}{2\sigma^2}\right)$$

Die Fließgeschwindigkeit berechnet sich aus dem Quotienten des Sensordurchmessern und der Zeit, die das Harz benötigt, die Sensorfläche zu überstreichen:

$$v = \frac{D_{Sensor}}{\Delta_{t\ Fliessfront}}$$

Bei einem idealen Sensor ergibt die Ableitung des Amplitudensignals nach der Zeit eine Ellipse, sodass die Breite dieser Ellipse 2r zur Geschwindigkeitsberechnung verwendet werden kann.

$$v = \frac{D_{Sensor}}{2 \cdot r_{Ellipse}}$$

Da in der Realität das Druckfeld nicht homogen, sondern mit zunehmendem Abstand am Rand schwächer wird, findet der Amplitudenabfall bei der Fließfrontdetektion in einem kleineren Bereich als der tatsächlichen Sensorbreite statt, sodass eine Korrektur stattfinden muss. Daher werden die Korrekturfaktoren ε und k eingeführt:

$$v = \varepsilon \cdot \frac{D_{Sensor}}{\sigma_{Gauss}} + k$$

Für einen Sensor mit kreisförmigen Querschnitt und einem Durchmesser von 10 mm ergibt sich ein Korrekturfaktor $\varepsilon$ von 0,37 mm und k von -1,25 mm pro Minute.

Ein solches Sensorsignal bzw. Amplitudensignal kann darüber hinaus auch zur Bestimmung der Fließfrontgeschwindigkeit genutzt werden, sofern nicht-rotationssymmetrische Sensorquerschnitte genutzt werden. Aufgrund der Rotationssymmetrie besitzen kreisförmige Sensoren einen richtungsunabhängigen Signalausschlag, während nicht-rotationssymmetrische Sensoren, wie beispielsweise rechteckige oder quadratische Sensoren, einen richtungsabhängigen Signalausschlag haben. Der Verlauf der Impuls-Echo-Amplitude von Ultraschallsensoren mit nicht-rotationssymmetrischen Querschnitten kann so zur Bestimmung der Fließrichtung genutzt werden.

Im Folgenden wird ein quadratischer Sensorquerschnitt betrachtet. Es sind aber auch dreieckige, ellipsenförmige oder andere nicht-rotationssymmetrische Querschnittsformen denkbar. Bei einem quadratischen Sensor hängt die Form des Amplitudenabfalls beim Fließfrontdurchgang auch von der Fließrichtung zum Sensor ab.

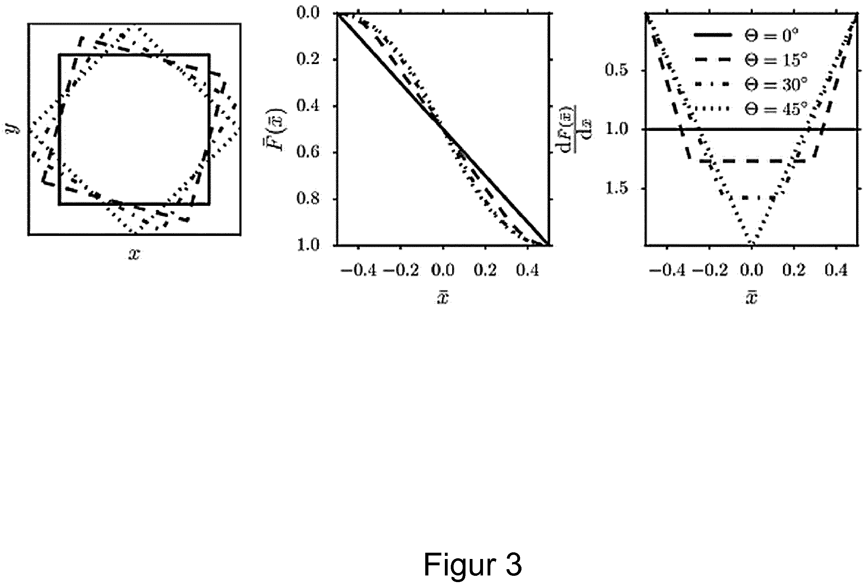

Bei einem quadratischen Sensor hängt die Form des Amplituden Abfalls beim Fließfrontdurchgang auch von der Fließrichtung zum Sensor im Bereich von $0° \leq \Omega \leq 45°$ ab. In Figur 3 wird dies durch unterschiedliche Winkel gezeigt, wobei in der mittleren Darstellung das Verhältnis zwischen benetzter Sensorfläche F von X sprich F(X) und dem Fließfrontfortschritt gezeigt ist, während auf der rechten Abbildung die Ableitung der benetzten Fläche im Verhältnis zum Fließfrontfortschritt gezeigt ist.

Bei einem Winkel von 0° ist die Breite des Sensors beim Überstreichen konstant, so dass die Fläche linear ansteigt. Bei größeren Winkel unterteilt sich die Flächenzunahme in drei Bereiche, wie deutlich im Diagramm auf der rechten Seite zu sehen ist, wo die Ableitung der Fläche über den Fließfrontfortschritt $\overline{\chi}$ aufgetragen ist. Die Ableitung entspricht dabei der normierten Breite des Sensors beim Überstreichen. Im mittleren Bereich ist die Breite konstant, erst bei einem Winkel von 45° entfällt dieser Bereich.

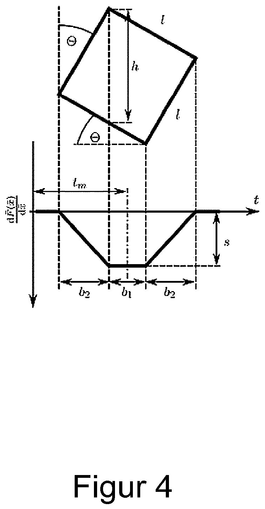

Analog zur Bestimmung der Fließfrontgeschwindigkeit durch Annährung einer parametrisierten Kurve wird der Amplitudenverlauf bzw. dessen Ableitung mit einem "Best-Fit" angenähert. Die Entstehung der Kurve der Ableitung der Amplitude ist proportional zur Breite des Sensors, der bei der Überlappung der Fließfront und des Sensorquerschnitts entsteht. Die Kurve und die Definition der vier notwendigen Parameter und deren Abhängigkeit vom Drehwinkel $\Omega$ sind in Figur 4 dargestellt.

Die Kurve y wird damit in Abhängigkeit der vier Parameter wie folgt beschrieben:

$$y = \begin{cases} s & f\ddot{u}r\left|t - t_m\right| \leq \frac{b_1}{2} \\ m \cdot t + n_1 & f\ddot{u}r -b_2 < t - t_m + \frac{b_1}{2} < 0 \\ -m \cdot + n_2 & f\ddot{u}r\, 0 < t - t_m - \frac{b_1}{2} < b_2 \\ 0 & f\ddot{u}r\left|t - t_m\right| \geq \frac{b_1}{2} + b_2 \end{cases}$$

$$mit \quad m = \frac{s}{b_2}, \quad n_1 = s \cdot \left(1 - \frac{2 \cdot t_m - b_1}{2 \cdot b_2}\right) und \quad n_2 = s \cdot \left(1 + \frac{2 \cdot t_m + b_1}{2 \cdot b_2}\right)$$

Die Ableitung des Sensorsignals (Amplitude) hängt von den Reflexionsfaktoren vor und nach dem Fließfrontdurchgang ab und korreliert direkt mit der benetzten Fläche. Der Skalierungsfaktor s überträgt dabei die Amplitude in eine Fläche und kann als Maximum der benetzten Sensorfläche pro Zeit angesehen werden.

Nachdem die Kurve in die gewonnenen Messdaten gefittet wurde, kann dann zurück auf den Winkel geschlossen werden. Anhand der beiden Parameter $b_1$ und $b_2$ ergibt sich folgender Zusammenhang:

$$\tan \Theta = \frac{b_2}{b_1 + b_2}$$

Aus dem Parameter s kann dabei nach der Gleichung

$$\tan \Theta = s - 1$$

der Winkel berechnet werden.

**Patentansprüche**

1. Verfahren zur Herstellung eines Faserverbundbauteils aus einem Faserverbundwerkstoff, wobei ein Fasermaterial des Faserverbundwerkstoffes in ein Formwerkzeug eingebracht, das in das Formwerkzeug eingebrachte Fasermaterial mit einem Matrixmaterial infundiert und anschließend das in das Fasermaterial infundierte Matrixmaterial ausgehärtet wird, wobei ein Formwerkzeug bereitgestellt wird, an dem mindestens ein Sensor zur Überwachung der Fließfront des Matrixmaterials während des Infundierens angeordnet ist, mit

   - Erfassen von Sensorsignalen mittels des mindestens einen Sensors während des Infundierens zumindest innerhalb eines Zeitraums, in dem das Matrixmaterial die Grenzschicht zwischen der Formwerkzeugoberfläche und dem Fasermaterial an der Sensorposition des Sensors benetzt, wobei das Sensorsignal mit der benetzten Fläche der Grenzschicht zwischen Formwerkzeugoberfläche und Fasermaterial an der gegebenen Sensorposition korreliert,
   und, mittels Auswerteeinheit,
   - Ermitteln eines Sensorsignalverlaufes über die Zeit aus den erfassten Sensorsignalen, und
   - Berechnen einer Fließfrontgeschwindigkeit während des Infundierens des Matrixmaterials in Abhängigkeit von aus dem Sensorsignalverlauf abgeleiteten Sensorsignaländerung über die Zeit und einer bekannten Sensorabmessung und/oder Sensorfläche des das Sensorsignal liefernden Sensors, und/oder
   - Berechnen einer Fließfrontrichtung bei nicht-rotationssymmetrischen Sensorquerschnitten bezüglich des Formwerkzeuges während des Infundierens des Matrixmaterials in Abhängigkeit von einer aus dem Sensorsignalverlauf abgeleiteten Sensorsignaländerung über die Zeit und einer Sensorausrichtung bezüglich des Formwerkzeuges.

2. Verfahren nach Anspruch 1, **dadurch gekennzeichnet, dass** für die Berechnung der Fließfrontgeschwindigkeit ein Zeitintervall zwischen dem Anfang und dem Ende der aus dem Sensorsignalverlauf abgeleiteten Sensorsignaländerung bestimmt und die Fließfrontgeschwindigkeit in Abhängigkeit von dem Zeitintervall und der bekannten Sensorabmessung und/oder Sensorfläche des Sensors berechnet wird.

3. Verfahren nach Anspruch 2, **dadurch gekennzeichnet, dass** der Anfang und das Ende der Sensorsignaländerung in Abhängigkeit von einem Maximalwert der ersten Ableitung des Sensorsignalverlaufes nach der Zeit berechnet wird.

4. Verfahren nach einem der vorhergehenden Ansprüche, **dadurch gekennzeichnet, dass** für die Berechnung der Fließfrontgeschwindigkeit die erste Ableitung des Sensorsignalverlaufes nach der Zeit berechnet und eine parametrisierte Kurve der berechneten ersten Ableitung des Sensorsignalverlaufes durch Anpassen von Parametern der parametrisierten Kurve angenähert wird, wobei aus mindestens einem Parameter der parametrisierten Kurve die Fließgeschwindigkeit abgeleitet wird.

5. Verfahren nach Anspruch 4, **dadurch gekennzeichnet, dass** die Parameter der parametrisierten Kurve mittels eines Optimierungsalgorithmus derart angepasst werden, dass die Summe der quadratischen Fehler zwischen den Messpunkten der ersten Ableitung und der parametrisierten Kurve minimal wird.

6. Verfahren nach Anspruch 4 oder 5, **dadurch gekennzeichnet, dass** für einen kreisförmigen Sensorquerschnitt eine Ellipse als parametrisierte Kurve y gemäß

$$y = \begin{cases} \frac{s}{r} \cdot \sqrt{r^2 - (\chi - c)^2} & \text{für} -\frac{r}{2} \leq \chi - c \leq \frac{r}{2} \\ 0 & \text{sonst} \end{cases}$$

verwendet wird mit den Parametern c als Mittelpunkt der Ellipse, r als Radius der Ellipse und s als Skalierungsfaktor, wobei die Fließfrontgeschwindigkeit in Abhängigkeit von der Breite der Ellipse gemäß

$$v = \frac{D_{Sensor}}{2 \cdot r_{Ellipse}}$$

berechnet wird mit $D_{Sensor}$ als Durchmesser des kreisförmigen Sensors und $r_{Ellipse}$ als Radius der Ellipse.

7. Verfahren nach Anspruch 4 oder 5, **dadurch gekennzeichnet, dass** für einen kreisförmigen Sensor eine Gauß'sche Glockenkurve als parametrisierte Kurve y gemäß

$$y = s \cdot \exp\left(-\frac{(\chi - \mu)^2}{2\sigma^2}\right)$$

verwendet wird mit den Parametern μ als Mittelpunkt der Glockenkurve, σ als Breite der Glockenkurve und s als Skalierungsfaktor, wobei die Fließfrontgeschwindigkeit in Abhängigkeit von der Breite der Glockenkurve gemäß

$$v = \frac{D_{Sensor}}{\sigma_{Gauss}}$$

berechnet wird mit $D_{Sensor}$ als Durchmesser des kreisförmigen Sensors und $\sigma_{Gauss}$ als Breite der Glockenkurve.

8. Verfahren nach den Ansprüche 6 oder 7, **dadurch gekennzeichnet, dass** in Abhängigkeit von dem Durchmesser des kreisförmigen Sensors ein oder mehrere Korrekturfaktoren für die Berechnung der Fließfrontgeschwindigkeit verwendet werden.

9. Verfahren nach einem der vorhergehenden Ansprüche, **dadurch gekennzeichnet, dass** bei der Berechnung der Fließfrontrichtung die erste Ableitung des Sensorsignalverlaufes nach der Zeit berechnet und eine parametrisierte Kurve der berechneten ersten Ableitung des Sensorsignalverlaufes durch Anpassen der Parameter der parametrisierten Kurve angenähert wird, wobei aus mindestens einem Parameter der parametrisierten Kurve die Fließfrontrichtung abgeleitet wird.

10. Verfahren nach Anspruch 9, **dadurch gekennzeichnet, dass** für einen zumindest rechteckigen Sensorquerschnitt eine parametrisierte Kurve y gemäß

$$y = \begin{cases} s & f\ddot{u}r \left| t - t_m \right| \leq \frac{b_1}{2} \\ m \cdot t + n_1 & f\ddot{u}r - b_2 < t - t_m + \frac{b_1}{2} < 0 \\ -m \cdot + n_2 & f\ddot{u}r\, 0 < t - t_m - \frac{b_1}{2} < b_2 \\ 0 & f\ddot{u}r \left| t - t_m \right| \geq \frac{b_1}{2} + b_2 \end{cases}$$

mit

$$m = \frac{s}{b_2}, \quad n_1 = s \cdot \left( 1 - \frac{2 \cdot t_m - b_1}{2 \cdot b_2} \right) und \quad n_2 = s \cdot \left( 1 + \frac{2 \cdot t_m + b_1}{2 \cdot b_2} \right)$$

mit den Parametern $b_1$ als Zeitintervall des sich ändernden Sensorsignalverlaufes, $b_2$ als Zeitintervall mit gleichbleibenden Sensorsignalverlauf, s als Maximum der benetzten Sensorfläche pro Zeit, t als Zeitparameter und $t_m$ als der Zeitpunkt beim Erreichen der geometrischen Sensormitte, wobei ein Fließfrontwinkel Θ zwischen einem Schenkel des zumindest rechteckigen Sensorquerschnitts und der Fließfront gemäß

$$\tan \Theta = \frac{b_2}{b_1 + b_2}$$

oder gemäß

$$\tan \Theta = s - 1$$

berechnet und die Fließfrontrichtung in Abhängigkeit von dem Fließfrontwinkel Θ und der Sensorausrichtung bezüglich des Formwerkzeuges ermittelt wird.

11. Verfahren nach einem der vorhergehenden Ansprüche, **dadurch gekennzeichnet, dass** ein Formwerkzeug bereitgestellt wird, an dem mindestens ein akustischer Sensor, insbesondere ein Ultraschallsensor, ein dielektrischer Sensor oder ein kernmagnetischer Resonanzsensor angeordnet ist.

12. Verfahren nach einem der vorhergehenden Ansprüche, **dadurch gekennzeichnet, dass** ein Formwerkzeug bereitgestellt wird, an dem eine Mehrzahl von Sensoren in einer gewissen geometrischen Sensoranordnung angeordnet sind, wobei die Fließfrontrichtung während des Infundierens des Matrixmaterials in Abhängigkeit von den ermittelten Sensorsignalverläufen der jeweiligen Sensoren und der Ausrichtung der geometrischen Sensoranordnung berechnet wird.

**Claims**

1. Method for producing a fibre reinforced composite element from a fibre composite, wherein a fibre material of the fibre composite is placed in a mould, the fibre material which is placed in the mould is infused with a matrix material, and subsequently the matrix material which is infused into the fibre material is cured, wherein a mould is made available on which at least one sensor for monitoring the flow front of the matrix material during the infusion is arranged, comprising

- acquiring sensor signals by means of the at least one sensor during the infusion at least within a time period in which the matrix material wets the boundary layer between the mould surface and the fibre material at the

13

sensor position of the sensor, wherein the sensor signal correlates with the wetted area of the boundary layer between the mould surface and the fibre material at the given sensor position, and, by means of an evaluation unit,
- determining a sensor signal progression over time from the acquired sensor signals, and
- calculating a flow front speed during the infusion of the matrix material as a function of a change in the sensor signal which is derived from the sensor signal progression over time and a known sensor dimension and/or a sensor area of the sensor supplying the sensor signal,
and/or
- calculating a flow front direction at non-rotationally-symmetrical sensor cross sections with respect to the mould during the infusion of the matrix material as a function of a change in the sensor signal which is derived from the sensor signal progression over time and a sensor orientation with respect to the mould.

2. Method according to Claim 1, **characterized in that** for the calculation of the flow front speed a time interval between the start and the end of the change in the sensor signal derived from the sensor signal progression is determined and the flow front speed is calculated as a function of the time interval and the known sensor dimension and/or sensor area of the sensor.

3. Method according to Claim 2, **characterized in that** the start and the end of the change in the sensor signal is calculated as a function of a maximum value of the first derivative of the sensor signal progression over time.

4. Method according to one of the preceding claims, **characterized in that** for the calculation of the flow front speed the first derivative of the sensor signal progression over time is calculated and a parameterized curve of the calculated first derivative of the sensor signal progression is approximated by adapting parameters of the parameterized curve, wherein the flow speed is derived from at least one parameter of the parameterized curve.

5. Method according to Claim 4, **characterized in that** the parameters of the parameterized curve are adapted by means of an optimization algorithm in such a way that the sum of the square errors between the measuring points of the first derivative and the parameterized curve becomes minimal.

6. Method according to Claim 4 or 5, **characterized in that** for a circular sensor cross section an ellipse is used as a parameterized curve y according to

$$y = \begin{cases} \frac{s}{r} \cdot \sqrt{r^2 - (\chi - c)^2} & \text{for } -\frac{r}{2} \le \chi - c \le \frac{r}{2} \\ 0 & \text{otherwise} \end{cases}$$

with the parameters c as a centre point of the ellipse, r as a radius of the ellipse, and s as a scaling factor, wherein the flow front speed is calculated as a function of the width of the ellipse according to

$$v = \frac{D_{Sensor}}{2 \cdot r_{Ellipse}}$$

with $D_{Sensor}$ as the diameter of the circular sensor and $r_{Ellipse}$ as a radius of the ellipse.

7. Method according to Claim 4 or 5, **characterized in that** for a circular sensor a Gaussian bell curve is used as a parameterized curve y according to

$$y = s \cdot \exp\left(-\frac{(\chi - \mu)^2}{2\sigma^2}\right)$$

14

with the parameters $\mu$ as a centre point of the bell curve, $\sigma$ as a width of the bell curve and s as a scaling factor, wherein the flow front speed is calculated as a function of the width of the bell curve according to

$$v = \frac{D_{Sensor}}{\sigma_{Gauss}}$$

with $D_{Sensor}$ as the diameter of the circular sensor and $\sigma_{Gauss}$ as the width of the bell curve.

8. Method according to Claim 6 or 7, **characterized in that**, depending on the diameter of the circular sensor, one of more correction factors are used for the correction of the flow front speed.

9. Method according to one of the preceding claims, **characterized in that** during the calculation of the flow front direction the first derivative of the sensor signal progression over time is calculated and a parameterized curve of the calculated first derivative of the sensor signal progression is approximated by adapting the parameters of the parameterized curve, wherein the flow front direction is derived from at least one parameter of the parameterized curve.

10. Method according to Claim 9, **characterized in that** for an at least rectangular sensor cross section a parameterized curve y according to

$$y = \begin{cases} s & for \; |t - t_m| \le \frac{b_1}{2} \\ m \cdot t + n_1 & for \; -b_2 < t - t_m + \frac{b_1}{2} < 0 \\ -m \cdot + n_2 & for \; 0 < \; t - t_m - \frac{b_1}{2} < b_2 \\ 0 & for \; |t - t_m| \ge \frac{b_1}{2} + b_2 \end{cases}$$

with

$$m = \frac{s}{b_2}, \; n_1 = s \cdot \left(1 - \frac{2 \cdot t_m - b_1}{2 \cdot b_2}\right) \; and \; n_2 = s \cdot \left(1 + \frac{2 \cdot t_m + b_1}{2 \cdot b_2}\right)$$

with parameters $b_1$ as a time interval of the changing sensor signal progression, $b_2$ as a time interval with a constant sensor signal progression, s as a maximum of the wetted sensor area over time, t as a time parameter and $t_m$ as the point in time when the geometric centre of the sensor is reached, wherein a flow front angle $\Theta$ between a side of the at least rectangular sensor cross section and the flow front is calculated according to

$$\tan\Theta = \frac{b_2}{b_1 + b_2}$$

or according to

$$\tan\Theta = s - 1$$

and the flow front direction is determined as a function of the flow front angle $\Theta$ and the sensor orientation with respect to the mould.

11. Method according to one of the preceding claims, **characterized in that** a mould is made available on which at least one acoustic sensor, in particular an ultrasonic sensor, a dielectric sensor or a core-magnetic resonance sensor is arranged.

12. Method according to one of the preceding claims, **characterized in that** a mould is made available on which a multiplicity of sensors are arranged in a specific geometric sensor arrangement, wherein the flow front direction during the infusion of the matrix material is calculated as a function of the determined sensor signal progressions of the respective sensors and the orientation of the geometric sensor arrangement.

**Revendications**

1. Procédé de fabrication d'un composant en matériau composite à base de fibres, dans lequel un matériau fibreux du matériau composite à base de fibres est introduit dans un outil de moulage, le matériau fibreux introduit dans l'outil de moulage est infusé avec un matériau de matrice et ensuite le matériau de matrice infusé dans le matériau fibreux est durci, un outil de moulage étant prévu sur lequel est disposé au moins un capteur pour surveiller le front d'écoulement du matériau de matrice pendant l'infusion, comprenant les étapes consistant à :

   - acquérir des signaux de capteur au moyen dudit au moins un capteur pendant l'infusion, au moins pendant une période de temps au cours de laquelle le matériau de matrice mouille la couche limite entre la surface de l'outil de moulage et le matériau fibreux à la position du capteur, le signal de capteur étant en corrélation avec la surface mouillée de la couche limite entre la surface de l'outil de moulage et le matériau fibreux à la position donnée du capteur,
   et, au moyen d'une unité d'évaluation
   - déterminer une évolution du signal de capteur dans le temps à partir des signaux de capteur acquis, et
   - calculer une vitesse du front d'écoulement pendant l'infusion du matériau de matrice en fonction de la variation du signal de capteur dans le temps, dérivée de l'évolution du signal de capteur, et en fonction d'une dimension connue du capteur et/ou d'une surface connue du capteur fournissant le signal de capteur, et/ou
   - dans le cas de sections transversales de capteur qui ne sont pas à symétrie de révolution, calculer une direction du front d'écoulement par rapport à l'outil de moulage pendant l'infusion du matériau de matrice en fonction d'une variation du signal de capteur dans le temps dérivée de l'évolution du signal de capteur et d'une orientation du capteur par rapport à l'outil de moulage.

2. Procédé selon la revendication 1,
   **caractérisé en ce que** pour calculer la vitesse du front d'écoulement, on détermine un intervalle de temps entre le début et la fin de la variation du signal de capteur, dérivée de l'évolution du signal de capteur, et on calcule la vitesse du front d'écoulement en fonction de l'intervalle de temps et de la dimension connue du capteur et/ou de la surface connue du capteur.

3. Procédé selon la revendication 2,
   **caractérisé en ce que** l'on calcule le début et la fin de la variation du signal de capteur en fonction d'une valeur maximale de la première dérivée de l'évolution du signal de capteur par rapport au temps.

4. Procédé selon l'une des revendications précédentes,
   **caractérisé en ce que** pour calculer la vitesse du front d'écoulement, on calcule la première dérivée de l'évolution du signal de capteur par rapport au temps et on approche une courbe paramétrée de la première dérivée calculée de l'évolution du signal de capteur en adaptant des paramètres de la courbe paramétrée, la vitesse d'écoulement étant dérivée d'au moins un paramètre de la courbe paramétrée.

5. Procédé selon la revendication 4,
   **caractérisé en ce que** l'on adapte les paramètres de la courbe paramétrée au moyen d'un algorithme d'optimisation de telle sorte que la somme des erreurs quadratiques entre les points de mesure de la première dérivée et de la courbe paramétrée devienne minimale.

6. Procédé selon la revendication 4 ou 5,
   **caractérisé en ce que** pour une section transversale circulaire du capteur, on utilise une ellipse comme courbe paramétrée y selon

$$y = \begin{cases} \frac{s}{r} \cdot \sqrt{r^2 - (\chi - c)^2} & \text{pour} \quad -\frac{r}{2} \leq \chi - c \leq \frac{r}{2} \\ 0 & \text{sinon} \end{cases}$$

avec les paramètres c comme centre de l'ellipse, r comme rayon de l'ellipse et s comme facteur d'échelle, la vitesse du front d'écoulement étant calculée en fonction de la largeur de l'ellipse selon

$$v = \frac{D_{Capteur}}{2 \cdot r_{Ellipse}}$$

avec $D_{Capteur}$ comme diamètre du capteur circulaire et $r_{Ellipse}$ comme rayon de l'ellipse.

7. Procédé selon la revendication 4 ou 5,
**caractérisé en ce que** pour un capteur circulaire, on utilise une courbe en cloche gaussienne comme courbe paramétrée y selon

$$y = s \cdot \exp\left(-\frac{(\chi - \mu)^2}{2\sigma^2}\right)$$

avec les paramètres $\mu$ comme centre de la courbe en cloche, $\sigma$ comme largeur de la courbe en cloche et s comme facteur d'échelle, la vitesse du front d'écoulement étant calculée en fonction de la largeur de la courbe en cloche selon

$$v = \frac{D_{Capteur}}{\sigma_{Gauss}}$$

avec $D_{Capteur}$ comme diamètre du capteur circulaire et $\sigma_{Gauss}$ comme largeur de la courbe en cloche.

8. Procédé selon les revendications 6 ou 7,
**caractérisé en ce que**, en fonction du diamètre du capteur circulaire, on utilise un ou plusieurs facteurs de correction pour calculer la vitesse du front d'écoulement.

9. Procédé selon l'une des revendications précédentes,
**caractérisé en ce que** lors du calcul de la direction du front d'écoulement, on calcule la première dérivée de l'évolution du signal de capteur par rapport au temps et on approche une courbe paramétrée de la première dérivée calculée de l'évolution du signal de capteur en adaptant les paramètres de la courbe paramétrée, la direction du front d'écoulement étant dérivée d'au moins un paramètre de la courbe paramétrée.

10. Procédé selon la revendication 9,
**caractérisé en ce que** pour une section transversale au moins rectangulaire de capteur, on calcule une courbe paramétrée y selon

$$y = \begin{cases} s & pour & \left|t - t_m\right| \le \frac{b_1}{2} \\ m \cdot t + n_1 & pour & -b_2 < t - t_m + \frac{b_1}{2} < 0 \\ -m \cdot + n_2 & pour & 0 < t - t_m - \frac{b_1}{2} < b_2 \\ 0 & pour & \left|t - t_m\right| \ge \frac{b_1}{2} + b_2 \end{cases}$$

avec

$$m = \frac{s}{b_2}, \quad n_1 = s \cdot \left(1 - \frac{2 \cdot t_m - b_1}{2 \cdot b_2}\right) \quad et \quad n_2 = s \cdot \left(1 + \frac{2 \cdot t_m + b_1}{2 \cdot b_2}\right)$$

avec les paramètres $b_1$ comme intervalle de temps de l'évolution variée du signal de capteur, $b_2$ comme intervalle de temps de l'évolution constante du signal de capteur, s comme maximum de la surface mouillée du capteur dans le temps, t comme paramètre de temps et $t_m$ comme instant où le centre géométrique du capteur est atteint, un angle $\Theta$ du front d'écoulement entre une branche de la section transversale au moins rectangulaire du capteur et le front d'écoulement étant calculé selon

$$\tan \Theta = \frac{b_2}{b_1 + b_2}$$

ou selon

$$\tan \Theta = s - 1$$

et on détermine la direction du front d'écoulement en fonction de l'angle $\Theta$ du front d'écoulement et de l'orientation du capteur par rapport à l'outil de moulage.

11. Procédé selon l'une des revendications précédentes,
    **caractérisé en ce qu'**il est prévu un outil de moulage sur lequel est disposé au moins un capteur acoustique, en particulier un capteur à ultrasons, un capteur diélectrique ou un capteur à résonance magnétique nucléaire.

12. Procédé selon l'une des revendications précédentes,
    **caractérisé en ce qu'**il est prévu un outil de moulage sur lequel plusieurs capteurs sont disposés dans un certain agencement géométrique de capteurs, la direction du front d'écoulement pendant l'infusion du matériau de matrice étant calculée en fonction des évolutions déterminées des signaux de capteur des capteurs respectifs et de l'orientation de l'agencement géométrique de capteurs.

# Figur 1

(a)

(b)

# Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19737276 C2
- DE 19834797 C2
- DE 102012103753 A1
- FR 2900237